# EUROPEAN PATENT APPLICATION

(11) **EP 4 372 566 A1**
(43) Date of publication of application: **22.05.2024**
(21) Application number: 22208321.4
(22) Date of filing: 18.11.2022
(51) Int. Cl.: G06F 11/36, B60W 60/00

(54) **ADS DRIVING SCENARIO GENERATION**

(71) Applicant: Zenseact AB, 417 56 Göteborg (SE)
(72) Inventor: GYLLENHAMMAR, Magnus, 435 43 Pixbo (SE); LINDBERG, Carl, 426 79 Västra Frölunda (SE)
(74) Representative: Valea AB

(57) **Abstract**

The present disclosure relates to a method performed by a scenario generating system (1) for supporting generation of driving scenarios of an ADS (21), which ADS is provided onboard a vehicle (2). The scenario generating system obtains (1001) vehicle surroundings data based on sensor data derived from one or more vehicle-mounted sensors (24); determines (1002) by assessing the vehicle surroundings data, one or more potential interaction situations ahead involving the vehicle and one or more potential surrounding road users (3); selects (1003) at least a first of the one or more potential interaction situations, fulfilling predeterminable interaction criteria pinpointing interaction situations in view of which further ADS development is requested; identifies (1004) an on-road located position (5) offering another vantage point than the vehicle to the selected at least first potential interaction situation, which on-road located position fulfils predeterminable position criteria defining on-road located positions relative the selected at least first potential interaction situation, of interest in view of further ADS development; controls (1005) by the ADS, a virtual version (6) of the vehicle deployed in the identified position; and generates (1006) ADS performance data enacted from the ADS-controlled virtual vehicle.

The disclosure also relates to a scenario generating system in accordance with the foregoing, an arrangement - for instance a vehicle and/or an offboard system (7) comprising such a scenario generating system, and a respective corresponding computer program product and non-volatile computer readable storage medium.

## Description

### TECHNICAL FIELD

The present disclosure relates to supporting generation of driving scenarios of an ADS.

### BACKGROUND

Within the automotive field, there has for quite some years been activity in the development of autonomous vehicles. An increasing number of modern vehicles have advanced driver-assistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. Moreover, in a not-too-distant future, Autonomous Driving, AD, will to a greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. RADAR, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

The development of ADSs is, however, challenging in view of the difficulties of verifying system safety. The reason for this is that the verification of system safety requires extensive testing, i.e. the ADS needs to be tested towards a sufficiently large number of accident-prone situations that are "rare" in some sense. One way to remedy the need for in-car testing of such situations, is to collect data to support scenario-based validation and testing. However, it is necessary to experience or collect the situations, and collecting all data from an ADS is infeasible, both due to the produced extensive amount of information from sensors and other onboard systems as well as when considering e.g. an entire fleet of vehicles. Having access to appropriate scenarios adequately covering rare and difficult events directly supports the development, deployment and in turn the safety argumentation of an ADS. There is thus a need to curate what data is selected - and further e.g. collected - for further analysis and use in the development process of the ADS.

### SUMMARY OF THE INVENTION

It is therefore an object of embodiments herein to provide an approach for in an improved and/or alternative manner support generation of driving scenarios - such as critical driving scenarios - of an ADS.

The object above may be achieved by the subject-matter disclosed herein. Embodiments are set forth in the appended claims, in the following description and in the drawings.

The disclosed subject-matter relates to a method performed by a scenario generating system for supporting generation of driving scenarios of an ADS, which ADS is provided onboard a vehicle. The scenario generating system obtains vehicle surroundings data based on sensor data derived from one or more vehicle-mounted sensors. The scenario generating system further determines - by assessing the vehicle surroundings data - one or more potential interaction situations ahead involving the vehicle and one or more potential surrounding road users. Moreover, the scenario generating system selects at least a first of the one or more potential interaction situations, fulfilling predeterminable interaction criteria pinpointing interaction situations in view of which further ADS development is requested. The scenario generating system furthermore identifies an on-road located position offering another vantage point than the vehicle to the selected at least first potential interaction situation, which on-road located position fulfills predeterminable position criteria defining on-road located positions - relative the selected at least first potential interaction situation - of interest in view of further ADS development. Moreover, the scenario generating system controls, by the ADS, a virtual version of the vehicle deployed in the identified position. Furthermore, the scenario generating system generates ADS performance data enacted from the ADS-controlled virtual vehicle.

The disclosed subject-matter further relates to a scenario generating system for - and/or adapted and/or configured for - supporting generation of driving scenarios of an ADS, which ADS is provided onboard a vehicle. The scenario generating system comprises a surroundings obtaining unit for - and/or adapted and/or configured for - obtaining vehicle surroundings data based on sensor data derived from one or more vehicle-mounted sensors. The scenario generating system further comprises an interaction determining unit for - and/or adapted and/or configured for - determining, by assessing the vehicle surroundings data, one or more potential interaction situations ahead involving the vehicle and one or more potential surrounding road users. Moreover, the scenario generating system comprises an interaction selecting unit for - and/or adapted and/or configured for - selecting at least a first of the one or more potential interaction situations, fulfilling predeterminable interaction criteria pinpointing interaction situations in view of which further ADS development is requested. The scenario generating system further comprises a position determining unit for - and/or adapted and/or configured for - identifying an on-road located position offering another vantage point than the vehicle to the selected at least first potential interaction situation, which on-road located position fulfils predeterminable position criteria defining on-road located positions - relative the selected at least first potential interaction situation - of interest in view of further ADS development. Moreover, the scenario generating system comprises a virtual vehicle controlling unit for- and/or adapted and/or configured for - controlling, by the ADS, a virtual version of the vehicle deployed in the identified position. Furthermore, the scenario generating system comprises a data generating unit for - and/or adapted and/or configured for - generating ADS performance data enacted from the ADS-controlled virtual vehicle.

Furthermore, the disclosed subject-matter relates to an arrangement, for instance a vehicle and/or an offboard system, comprising a scenario generating system as described herein.

Moreover, the disclosed subject-matter relates to a computer program product comprising a computer program containing computer program code means arranged to cause a computer or a processor to execute the steps of the scenario generating system described herein, stored on a computer-readable medium or a carrier wave. The disclosed subject-matter further relates to a non-volatile computer readable storage medium having stored thereon said computer program product.

Thereby, there is introduced an approach enabling relevant and/or valuable driving scenarios to be generated, for subsequent use as ADS test scenarios such as for testing of ADS safety. That is, since there is obtained vehicle surroundings data based on sensor data derived from one or more vehicle-mounted sensors, there is derived, for instance continuously and/or intermittently e.g. while the vehicle is travelling, data reflecting at least a portion of surroundings of the vehicle - e.g. as estimated and/or determined by an onboard perception system - with support from vehicle-mounted sensor(s) such as surrounding detecting sensor(s). Furthermore, that is, since there is determined - by assessing the vehicle surroundings data - one or more potential interaction situations ahead involving the vehicle and one or more potential surrounding road users, there is through evaluation of the obtained vehicle surroundings data, identified situations up ahead - such as upcoming crossings e.g. pedestrian crossings and/or potential upcoming cut-in situations - where the vehicle has potential to experience and/or be exposed to interaction - and/or interaction effects - with other road user(s). Moreover, that is, since there is selected at least a first of the one or more potential interaction situations, fulfilling predeterminable interaction criteria pinpointing interaction situations in view of which further ADS development is requested, there is selected at least a first of the determined potential interaction situations, which selected potential interaction situation(s) e.g. pedestrian crossing - and/or the potential interaction effect(s) that may arise and/or be enabled therefrom e.g. interaction with crossing road user(s) - is deemed relevant and/or interesting - such as potentially rendering unseen, rare and/or valuable traffic scenarios - in view of development of ADSs, for instance in view of ADS testing such as of ADS safety. Furthermore, that is, since there is identified an on-road located position offering another vantage point than the vehicle to the selected at least first potential interaction situation, which on-road located position fulfills predeterminable position criteria defining on-road located positions - relative the selected at least first potential interaction situation - of interest in view of further ADS development, there is found, e.g. by applying said position criteria in combination with evaluation of the obtained vehicle surroundings data, at least a first road-located position - differing from a position of the vehicle - at which distance and/or angle relative the selected potential interaction situation(s), it is deemed to be valuable and/or fruitful for the ADS to - for instance for potentially rendering unseen, rare and/or valuable traffic scenarios - be exposed to and/or experiencing the selected interaction situation(s) e.g. pedestrian crossing - and/or the potential interaction effect(s) that may arise and/or be enabled therefrom e.g. interaction with crossing road user(s) - in view of ADS development, for instance in view of ADS testing such as of ADS safety. Moreover, that is, since there is controlled, by the ADS, a virtual version of the vehicle deployed in the identified position, a virtual version of the vehicle - which may be referred to as an imaginary and/or fictive vehicle and/or an ADS-controlled virtual vehicle - is projected at the identified position. Accordingly, the ADS calculates its actions for the virtual vehicle, i.e. the ADS calculates what actions it should take given that its current position would be the identified position. The virtual vehicle is thus controlled by the ADS, using data with an offset. Furthermore, that is, since there is generated ADS performance data enacted from the ADS-controlled virtual vehicle, there is produced driving scenarios stemming from and/or related to the selected potential interaction situation(s) - and/or the potential interaction effect(s) that may arise and/or be enabled therefrom - as experienced from and/or by the virtual vehicle. That is, with the imaginary vehicle being deployed at a vantage point differing from the position of the operating vehicle itself, there is generated - pertinent the imaginary vehicle - driving scenarios stemming from and/or related to the selected potential interaction situation(s) e.g. pedestrian crossing - and/or the potential interaction effect(s) that may arise and/or be enabled therefrom e.g. interaction with crossing road user(s) - differing from driving scenarios that may be generated by the operating vehicle, thus differing from real driving scenarios. Consequently, since the position is/was identified and thus selected for being of interest in view of further ADS development, it follows that there is supported generation of driving scenarios pertinent the imaginary vehicle - deployed at said position - which are deemed to be of interest in view of further ADS development, for instance in view of ADS testing such as of ADS safety, for instance critical driving scenarios, and/or unseen, rare and/or valuable driving scenarios. Accordingly, the performance of the ADS enacted in the imaginary vehicle is used to generate driving scenarios, valuable for further development of ADSs, which otherwise could have been missed. Measures from the performance of the virtual vehicle is thus used to find valuable and/or critical scenarios. In other words, according to the introduced concept, the performance of the ADS enacted in the virtual vehicle is used to find valuable and/or critical scenarios, and by such enabling subsequent effective updates to development data of ADSs, thus supporting accelerated further ADS development.

Explained differently, since there is no actual vehicle in the determined position from which the ADS evaluates its actions, all other road users will naturally act as if there is no vehicle there. Accordingly, the ADS may encounter a - e.g. dramatically - higher frequency of situations, e.g. where accidents may occur, since the imaginary vehicle is invisible to its surroundings, e.g. encountering scenarios potentially deemed highly relevant considering that accidents from time to time may result from a vehicle not noticing other road user(s) such as during a lane change, passing of a crossing, etc. This may subsequently lead to - e.g. much - less testing needed to be carried out for the ADS to have encountered a satisfactory large number of situations - e.g. dangerous situations - involving other road users, to be able to verify performance, such as verify the safety and performance of the emergency safety. Especially, the ADS's capabilities to handle adverse situations may in such a manner be evaluated and subsequently tested more efficiently. Thus, not only may the concept introduced herein support accelerated subsequent testing of e.g. emergency maneouvres of the ADS, but may also assist in quantifying the performance of it, which in turn supports overall safety argumentation of the ADS as a whole.

For that reason, an approach is provided for in an improved and/or alternative manner support generation of driving scenarios - such as critical driving scenarios - of an ADS.

### BRIEF DESCRIPTION OF THE DRAWINGS

The various aspects of the non-limiting embodiments, including particular features and advantages, will be readily understood from the following detailed description and the accompanying drawings, in which:
**Fig. 1** depicts a schematic view of an exemplifying traffic scene considered by an exemplifying scenario generating system according to embodiments of the disclosure;
**Fig. 2** is a schematic block diagram illustrating an exemplifying scenario generating system according to embodiments of the disclosure; and
**Fig. 3** is a flowchart depicting an exemplifying method performed by a scenario generating system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting generation of driving scenarios - such as critical driving scenarios - of an ADS, there will be disclosed an approach enabling relevant and/or valuable driving scenarios to be generated, for subsequent use as ADS test scenarios such as for testing of ADS safety.

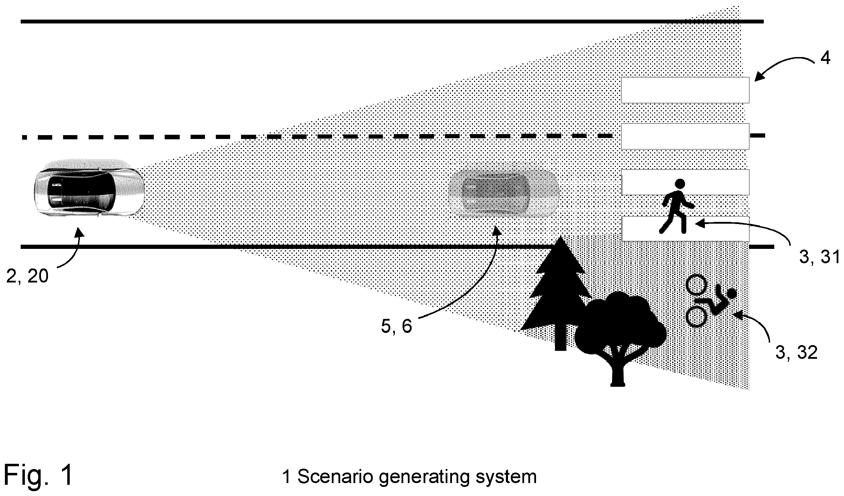

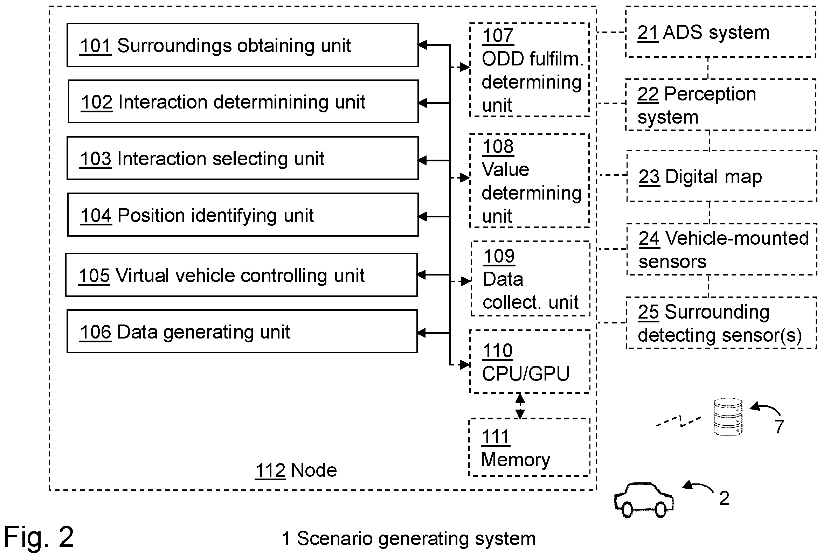

Referring now to the figures, there is depicted in **Fig. 1** a schematic view of an exemplifying traffic scene considered by - and in **Fig. 2** a schematic block diagram illustrating - an exemplifying **scenario generating systema 1** according to embodiments of the disclosure. The scenario generating system 1 is adapted and/or configured for supporting generation of driving scenarios of an **ADS 21,** which ADS 21 is provided onboard a **vehicle 2.**

The vehicle 2 - which throughout may be referred to as a host vehicle and/or ego-vehicle - may be represented by any arbitrary - e.g. known - manned or unmanned vehicle, for instance engine-propelled and/or electrically-powered, such as by a car, truck, lorry, van, bus and/or tractor, etc. Moreover, the term "vehicle" may according to an example further refer to "production vehicle", "fleet vehicle", "launched vehicle", "road-traffic vehicle" and/or "public road vehicle". Furthermore, the ADS 21 with which the vehicle 2 is equipped, may be represented by any arbitrary ADAS or AD system e.g. known in the art and/or yet to be developed. The vehicle 2 and/or ADS 21 may comprise and/or be provided with a **perception system 22** adapted to estimate vehicle surroundings, and subsequently adapted to estimate world views of the surroundings e.g. with support from a - e.g. commonly known - **digital map 23** such as a high definition, HD, map, and/or an equivalent and/or successor thereof. Such a perception system 22 may refer to any commonly known system, module and/or functionality, e.g. comprised in one or more electronic control modules, ECUs, and/or nodes of the vehicle 2 and/or the ADS 21, adapted and/or configured to interpret sensory information - relevant for driving of the vehicle 2 - to identify e.g. objects, obstacles, vehicle lanes, relevant signage, appropriate navigation paths etc. The perception system 22 - which may be adapted to support e.g. sensor fusion, tracking, localization etc. - may thus be adapted to rely on sensory information. Such exemplifying sensory information may, for instance, be derived from one or more - e.g. commonly known - **sensors 24** comprised in and/or provided onboard the vehicle 2 adapted to sense and/or perceive said vehicle's 2 whereabouts and/or surroundings, for instance represented by one or a combination of one or more of **surrounding detecting sensors 25** and/or a positioning system, odometer, inertial measurement units etc. In other words, such a perception system 22 is in the present context thus to be understood as a system responsible for acquiring raw sensor data from onboard sensors 24, such as from surrounding detecting sensors 25 etc., and converting this raw data into scene understanding.

"Scenario generating system" may refer to "scenario mining system", "test scenario generating system" and/or "test data generating system", whereas "a method performed by a scenario generating system" may refer to "an at least partly computer-implemented method performed by a scenario generating system". Moreover, "for supporting generation of driving scenarios" may refer to "for generation of driving scenarios" and/or "for supporting generation of events, e.g. driving events", and according to an example further to "for supporting generation of critical driving scenario, e.g. safety critical driving scenarios", "for supporting generation of requested, valuable, interesting, desirable, rare and/or unseen driving scenarios", "for supporting generation of driving scenarios deemed and/or determined valuable, critical and/or of interest in view of ADS development and/or ADS testing", "for supporting generation of test data for ADS testing, e.g. of ADS safety" and/or "for supporting collection of driving scenarios".

As illustrated in an exemplifying manner in exemplifying Figs. 1 and 2, the scenario generating system 1 is further - e.g. by means of a **surroundings obtaining unit 101-**adapted and/or configured for obtaining vehicle surroundings data based on sensor data derived from one or more vehicle-mounted sensors 24. Thereby, there is derived, for instance continuously and/or intermittently e.g. while the vehicle 2 is travelling, data reflecting at least a portion of surroundings of the vehicle 2 - e.g. as estimated and/or determined by an onboard perception system 22 - with support from vehicle-mounted sensor(s) 24 such as surrounding detecting sensor(s) 25.

The vehicle surroundings data - which according to an example may be referred to as world view data - may for instance comprise and/or be indicative of detected surrounding conditions and/or objects or objects' states and/or vehicle localization, and/or statistical and physical model predictions of future states, for instance derived continuously and/or intermittently. Moreover, the vehicle surroundings data may be represented by at least a portion of sensor data obtained from the one or more vehicle-mounted sensors 24 of the vehicle 2, and further - similar to the sensor data - be of any feasible format and/or size, for instance dictated by the circumstances at hand.

Optionally, and as illustrated in an exemplifying manner in exemplifying Fig. 2, the scenario generating system 1 may further - e.g. by means of an optional **ODD fulfillment determining unit 107** - be adapted and/or configured for determining that Operational Design Domain, ODD, conditions of the ADS 21 are fulfilled. Thereby, there may - e.g. with support from onboard sensor(s) 24 and/or digital map(s) 23 - be established - e.g. subsequent obtaining vehicle surroundings data - whether e.g. operating conditions of the vehicle 2 are within the ADS's 21 ODD.

"Obtaining vehicle surroundings data" may refer to "retrieving, deriving and/or receiving vehicle surroundings data", and according to an example further to "obtaining continuously and/or intermittently vehicle surroundings data" and/or "obtaining vehicle surroundings data with support from and/or as generated by an onboard perception system". Moreover, "vehicle surroundings data" may refer to "data indicative of vehicle surroundings", "vehicle surroundings estimates" and/or merely "vehicle surroundings", and according to an example further to "world view data or a world view", "perception data", "surroundings assessment data" and/or "processed sensory data". The phrase "based on sensor data derived from one or more vehicle-mounted sensors", on the other hand, may refer to "with input from and/or support from one or more vehicle-mounted sensors" and/or "based on sensor data gathered and/or collected from one or more vehicle-mounted sensors".

As illustrated in an exemplifying manner in exemplifying Figs. 1 and 2, the scenario generating system 1 is further - e.g. by means of an **interaction determining unit 102** - adapted and/or configured for determining - by assessing the vehicle surroundings data - one or more potential interaction situations ahead involving the vehicle 2 and one or more potential surrounding road users. Thereby, there is through evaluation of the obtained vehicle surroundings data, identified situations up ahead - such as upcoming crossings e.g. **pedestrian crossings 4** and/or potential upcoming cut-in situations - where the vehicle 2 has potential to experience and/or be exposed to interaction - and/or interaction effects - with other **road user(s) 3.**

The potential surrounding road user(s) may be represented by **detected road user(s) 31** - such as derivable from the vehicle surroundings data - and/or **undetected road user(s) 32,** for instance assumed and/or predicted - e.g. through evaluation of the vehicle surrounding data - to potentially be occluded and/or to up ahead potentially enter into the vehicle's 2 surroundings. Throughout, "road users" - which may refer to "traffic participants" - may potentially, in addition to be represented by e.g. other vehicles and/or vulnerable road users such as e.g. pedestrians cyclists, electric scooter riders etc., for instance further be represented by larger animals such as e.g. elk, moose, dog, etc. The interactions situations, on the other hand, from which interaction effects with other road user(s) may arise and/or be enabled, may be represented by any feasible traffic situations in which the vehicle 2 potentially may experience and/or be exposed to interaction with other road user(s), such as the vehicle's 2 emergency and/or path planning being affected by said road user(s). The potential interaction situations may thus, as indicated above, be represented by e.g. upcoming crossings 4, for instance detected and derivable from the vehicle surroundings data, and/or potential upcoming surrounding vehicle lane-change situations, for instance identified and/or predicted from evaluation of the vehicle surroundings data such as available gaps and/or behaviour of other traffic participants.

The phrase "determining by assessing said vehicle surroundings data" may refer to "identifying and/or deriving by assessing said vehicle surroundings data", "determining from and/or based on assessing said vehicle surroundings data" and/or "determining by evaluating and/or analyzing said vehicle surroundings data". "Determining [...] one or more potential interaction situations ahead", on the other hand, may refer to determining [...] one or more interaction situations ahead", "determining [...] respective potential interaction situations ahead", "determining [...] one or more potential interaction situation candidates ahead", "determining [...] one or more potential types of interactions ahead" and/or "determining [...] one or more potential upcoming interaction situations", and according to an example further to determining [...] one or more potential interaction situations ahead relating to e.g. cut-ins and/or crossings" and/or "determining [...] one or more potential interaction effects ahead". Moreover, "potential interaction situations ahead" may refer to "interaction situations with - and/or deemed and/or determined having - potential to occur" and/or "likely-to-occur interaction situations", and according to an example further to "potential ego-vehicle interaction situations ahead". "Involving said vehicle and one or more potential surrounding road users", on the other hand, may refer to "between said vehicle and one or more potential surrounding road users" and/or "involving said vehicle and one or more detected, undetected and/or at least partially occluded surrounding road users".

As illustrated in an exemplifying manner in exemplifying Figs. 1 and 2, the scenario generating system 1 is further - e.g. by means of an **interaction selecting unit 103-**adapted and/or configured for selecting at least a first of the one or more potential interaction situations, fulfilling predeterminable interaction criteria pinpointing interaction situations in view of which further ADS development is requested. Thereby, there is selected at least a first of the determined potential interaction situations, which selected potential interaction situation(s) e.g. pedestrian crossing 4 - and/or the potential interaction effect(s) that may arise and/or be enabled therefrom e.g. interaction with crossing road user(s) 31, 32 - is deemed relevant and/or interesting - such as potentially rendering unseen, rare and/or valuable traffic scenarios - in view of development of ADSs, for instance in view of ADS testing such as of ADS safety.

The predeterminable interaction criteria may be represented by any feasible one or more criteria defining and/or stipulating conditions pinpointing and/or filtering out potential interaction situations, which potential interaction situations - and/or potential interaction effects potentially arising, being supported and/or being enabled therefrom - are considered and/or determined to be desirable, such as for instance deemed to potentially render unseen, rare and/or valuable traffic scenarios and/or previously unknown. unaware and/or unidentifiable traffic scenarios and/or unexpected, unimaginable and/or surprising traffic scenarios, in view of further ADS development, for instance - as indicated above - in view of ADS performance e.g. testing of ADS safety.

"Selecting at least a first of the one or more potential interaction situations" may refer to "identifying, determining and/or deriving at least a first of the one or more potential interaction situations", whereas "fulfilling predeterminable interaction criteria" may refer to "matching predeterminable interaction criteria" and according to an example further to "fulfilling predeterminable interaction situation criteria". Moreover, "one or more potential interaction situations fulfilling predeterminable interaction criteria pinpointing interaction situations in view of which further ADS development is requested" may according to an example refer to merely "one or more potential interaction situations in view of which further ADS development is requested" and/or "one or more potential interaction situations fulfilling predeterminable interaction criteria pinpointing interaction situations in view of which collection of further ADS performance data for ADS testing is requested". The phrase "in view of which" may in this context refer to "in relation to which", whereas "further ADS development is requested" may refer to "further ADS development is deemed and/or determined to be requested" and/or "further ADS development is requested, of interest, valuable, beneficial, needed and/or required". Furthermore, "interaction criteria pinpointing interaction situations" may refer to "interaction criteria defining and/or filtering out interaction situations".

Optionally, selecting at least a first of the one or more potential interaction situations may comprise - and/or the interaction selecting unit 103 may be adapted and/or configured for - selecting at least a first of the one or more potential interaction situations, fulfilling predeterminable interaction criteria **set in view of** previously collected ADS performance data. Thereby, the interaction criteria may be determined and/or set based on and/or taking into consideration ADS performance data already available, thus enabling to - e.g. dynamically - set the interaction criteria to pinpoint interaction situations - and/or potential interaction effects potentially arising and/or being enabled therefrom - not already covered, and/or not covered to sufficient and/or desired extent, by the previous - i.e. the already available - ADS performance data. ADS performance data may for instance be represented by time to collision, distance to collision, speed at collision, maximum braking force, uncomfortable action, etc.

As illustrated in an exemplifying manner in exemplifying Figs. 1 and 2, the scenario generating system 1 is further - e.g. by means of a **position identifying unit 104** - adapted and/or configured for identifying an **on-road located position 5** offering another vantage point 5 than the vehicle 2 to the selected at least first potential interaction situation, which on-road located position 5 fulfills predeterminable position criteria defining on-road located positions - relative the selected at least first potential interaction situation - of interest in view of further ADS development. Thereby, there is found, e.g. by applying said position criteria in combination with evaluation of the obtained vehicle surroundings data, at least a first road-located position 5 - differing from a **position 20** of the vehicle 2 - at which distance and/or angle relative the selected potential interaction situation(s), it is deemed to be valuable and/or fruitful for the ADS 21 to - for instance for potentially rendering unseen, rare and/or valuable traffic scenarios - be exposed to and/or experiencing the selected interaction situation(s) e.g. pedestrian crossing 4 - and/or the potential interaction effect(s) that may arise and/or be enabled therefrom e.g. interaction with crossing road user(s) 31, 32 - in view of ADS development, for instance in view of ADS testing such as of ADS safety.

The on-road located position 5 may be located at any feasible distance from - and/or angle in relation to - the vehicle 2 and/or the vehicle's 2 position 20, within range of onboard surrounding detecting sensors 25. According to an example, the on-road located position 5 may thus for instance be located in front of, sideways from, behind, and/or in a different lane than the vehicle 2. Furthermore, the predeterminable position criteria may be represented by any feasible one or more criteria filtering out geographical, e.g. dynamic, positions - differing from the vehicle's position 20 - being at a distance from and/or at an angle in relation to the selected potential interaction situation(s), considered and/or determined relevant and/or of interest - such as e.g. deemed to potentially render unseen, rare and/or valuable traffic scenarios - for experiencing and/or being exposed to the selected potential interaction situation(s) - and/or potential interaction effect(s) potentially arising, being supported and/or being enabled therefrom - in view of further ADS development, for instance - as indicated above - in view of ADS performance e.g. testing of ADS safety. Such a distance from the selected potential interaction situation(s) may be represented by any feasible distance, for instance nearer than a set threshold or, vice versa, further away than a set threshold, and/or for instance nearer than the position 20 of the vehicle 2, and further for instance range from less than a meter up to tens or even hundreds of meters or more. Similarly, such an angle relative the selected potential interaction situation(s) may be represented by any feasible angle, for instance in any feasible direction from the selected potential interaction situation(s), and further for instance differ from the vehicle position's 20 angle and/or direction relative the selected potential interaction situation(s). The vehicle position 20 may be - and/or may have been - determined in any feasible known manner, for instance with support from a commonly known positioning system.

"Identifying an on-road located position" may refer to "determining and/or deriving an on-road located position", "identifying a dynamic and/or non-fixed on-road located position" and/or "identifying a road-placed position", and according to an example further to "identifying by, from and/or based on assessing said vehicle surroundings data, an on-road located position". Moreover, "offering another vantage point" may refer to "enabling and/or supporting another vantage point" and/or "offering another position". "Fulfilling predeterminable position criteria", on the other hand, may refer to "matching predeterminable position criteria", whereas "defining on-road located positions" may refer to "stipulating conditions defining on-road located positions". Moreover, "on-road-located positions [...] of interest in view of further ADS development" may refer to "on-road-located positions [...] determined and/or deemed of interest in view of further ADS development" and/or "on-road-located positions [...] being of interest in view of further ADS development", whereas "of interest" in this context may refer to "valuable". According to an example, "identifying an on-road located position offering another vantage point than said vehicle to the selected at least first potential interaction situation" comprises "identifying an on-road located position offering another vantage point than said vehicle to the selected at least first potential interaction situation, said on-road located position supporting, allowing and/or enabling the selected at least first potential interaction situation and/or interaction effect".

Optionally, identifying an on-road located position 5 may comprise - and/or the position identifying unit 104 may be adapted and/or configured for - identifying an on-road located position 5 fulfilling predeterminable position criteria **set in view of** previously collected ADS performance data. Thereby, the position criteria may be determined and/or set based on and/or taking into consideration ADS performance data already available, thus enabling to - e.g. dynamically - set the position criteria to pinpoint positions - from which to experience and/or be exposed to the selected potential interaction situations - and/or potential interaction effects potentially arising and/or being enabled therefrom - at distances and/or angles relative the selected potential interaction situation(s) not already covered, and/or not covered to sufficient and/or desired extent, by the previous - i.e. the already available - ADS performance data. As previously indicated, ADS performance data may for instance be represented by time to collision, distance to collision, speed at collision, maximum braking force, uncomfortable action, etc.

As illustrated in an exemplifying manner in exemplifying Figs. 1 and 2, the scenario generating system 1 is further - e.g. by means of a **virtual vehicle controlling unit 105** - adapted and/or configured for controlling, by the ADS 21, a **virtual version 6** of the vehicle 2 deployed in the identified position 5. Thereby, a virtual version 6 of the vehicle 2 - which may be referred to as an imaginary and/or fictive vehicle 6 and/or an ADS-controlled virtual vehicle 6 - is projected at the identified position 5, Accordingly, the ADS 21 calculates its actions for the virtual vehicle 6, i.e. the ADS 21 calculates what actions it should take given that its current position would be the identified position 5. The virtual vehicle 6 is thus controlled by the ADS 21, using data with an offset.

The virtual version 6 of the vehicle 2 may be controlled for any feasible period of time ranging from less than a second up to minutes or more. Furthermore, "controlling by said ADS a virtual version of said vehicle" may refer to "controlling with - and/or utilizing - said ADS a virtual version of said vehicle", "controlling by said ADS a fictive and/or imaginary version of said vehicle", and according to an example further to "controlling by said ADS, based on said vehicle surroundings data, a virtual version of said vehicle". Moreover, "deployed in the identified position" may refer to "projected, generated, produced and/or introduced in the identified position".

As illustrated in an exemplifying manner in exemplifying Figs. 1 and 2, the scenario generating system 1 is further - e.g. by means of a **data generating unit 106** - adapted and/or configured for generating ADS performance data enacted from the ADS-controlled virtual vehicle 6. Thereby, there is produced driving scenarios stemming from and/or related to the selected potential interaction situation(s) - and/or the potential interaction effect(s) that may arise and/or be enabled therefrom - as experienced from and/or by the virtual vehicle 6. That is, with the imaginary vehicle 6 being deployed at a vantage point 5 differing from the position 20 of the operating vehicle 2 itself, there is generated - pertinent the imaginary vehicle 6 - driving scenarios e.g. events stemming from and/or related to the selected potential interaction situation(s) e.g. pedestrian crossing 4 - and/or the potential interaction effect(s) that may arise and/or be enabled therefrom e.g. interaction with crossing road user(s) 31, 32 - differing from driving scenarios that may be generated by the operating vehicle 2, thus differing from real driving scenarios. Consequently, since the position 5 is/was identified and thus selected for being of interest in view of further ADS development, it follows that there is supported generation of driving scenarios pertinent the imaginary vehicle 6 - deployed at said position 5 - which are deemed to be of interest in view of further ADS development, for instance in view of ADS testing such as of ADS safety, for instance critical driving scenarios, and/or unseen, rare and/or valuable driving scenarios. Accordingly, the performance of the ADS 21 enacted in the imaginary vehicle 6 is used to generate driving scenarios, valuable for further development of ADSs, which otherwise could have been missed. Measures from the performance of the virtual vehicle 6 is thus used to find valuable and/or critical scenarios. In other words, the performance of the ADS enacted in the virtual vehicle 6 is used to find valuable and/or critical scenarios, and by such enabling subsequent effective updates to development data of ADSs, thus supporting accelerated further ADS development.

Explained differently, since there is no actual vehicle in the determined position from which the ADS evaluates its actions, all other road users will naturally act as if there is no vehicle there. Accordingly, the ADS may encounter a - e.g. dramatically - higher frequency of situations, e.g. where accidents may occur, since the imaginary vehicle is invisible to its surroundings, e.g. encountering scenarios potentially deemed highly relevant considering that accidents from time to time may result from a vehicle not noticing other road user(s) such as during a lane change, passing of a crossing, etc. This may subsequently lead to - e.g. much - less testing needed to be carried out for the ADS to have encountered a satisfactory large number of situations - e.g. dangerous situations - involving other road users, to be able to verify performance, such as verify the safety and performance of the emergency safety. Especially, the ADS's capabilities to handle adverse situations may in such a manner be evaluated and subsequently tested more efficiently. Thus, not only may the concept introduced herein support accelerated subsequent testing of e.g. emergency maneouvres of the ADS, but may also assist in quantifying the performance of it, which in turn supports overall safety argumentation of the ADS as a whole.

"Generating ADS performance data" may refer to "producing ADS performance data", "generating ADS behavioral data", "generating evaluation data", "generating ADS performance data comprising driving scenarios", "generating driving scenarios" and/or "generating ADS driving scenarios", and according to an example further to "generating critical and/or valuable driving scenarios". As previously indicated, ADS performance data may for instance be represented by time to collision, distance to collision, speed at collision, maximum braking force, uncomfortable action, etc. Moreover, "enacted from the ADS-controlled vehicle" may refer to "stemming from and/or associated with the ADS-controlled vehicle" "enacted from said virtual version of the vehicle" and/or "enacted from the ADS-controlled vehicle in association with - and/or at and/or in vicinity of - said selected at least first potential interaction situation", and according to an example further to "enacted from interaction between a potential road user and the ADS-controlled virtual vehicle at and/or in association with said selected at least first potential interaction situation".

Optionally, and as illustrated in an exemplifying manner in exemplifying Fig. 2, the scenario generating system 1 may further - e.g. by means of an optional data collecting unit 109 - be adapted and/or configured for collecting at least a portion of the generated ADS performance data for development of ADSs. Thereby, the generated ADS performance data is gathered, and potentially further stored, transmitted and/or utilized, for subsequent use as - and/or for updating - ADS development data, such as for testing of ADS safety. Accordingly, there is supported efficient collection of relevant testing scenarios for ADS development, such as for ADS safety, thus enabling accelerated ADS development. The phrase "ADS performance data for development" may refer to "ADS performance data to use as development data for development", whereas "for development of ADSs" may refer to "for development of said ADS" and/or "for development of software of and/or control of ADSs", and according to an example further to "for development of ADSs to support safety argumentation" and/or "for development of emergency maneouvring of ADSs".

Optionally, prior to collecting at least a portion of the generated ADS performance data for development of ADSs, the scenario generating system 1 may - e.g. by means of an optional **development value determining unit 108** - be adapted and/or configured for determining a development value of the generated ADS performance data. Collecting at least a portion of the generated ADS performance data for development of ADSs may then comprise - and/or the optional data collecting unit 109 may then be adapted and/or configured for - collecting the at least a portion of the generated ADS performance data, provided that the development value fulfils predeterminable development value criteria. Thereby, there may be established how valuable and/or critical the generated ADS performance data - or driving scenario(s) thereof - is, for instance reflecting how valuable and/or critical an interaction effect with a road user 3 e.g. interaction with a crossing road user(s) 31, 32 - at the selected at least first potential interaction situation e.g. at a pedestrian crossing 4 - is, for instance in view of ADS testing such as of ADS safety. Furthermore, thereby, the optional collecting of the ADS performance data may then be restricted to only being carried out given that the ADS performance data is deemed relevant and/or valuable enough, i.e. matching criteria filtering out ADS performance data - e.g. driving scenarios - considered valuable, for instance in view of ADS testing such as of ADS safety, for instance critical driving scenarios, and/or unseen, rare and/or valuable driving scenarios. In other words, by calculating e.g. threat metrics and measure the difficulty for the virtual vehicle 6 to handle situation(s), it is possible to deduce events that are e.g. rare and/or unseen, and/or anomalies in relation to previously collected data used for developing the control used in the virtual vehicle 6.

The development value may be determined in any feasible manner, e.g. by assessing and/or evaluating at least a portion of the generated ADS performance data, and derive how valuable and/or critical the ADS performance data - and/or driving scenario(s) thereof - is deemed to be. The development value may thus for instance be represented by a threat metric and/or measure, e.g. a KPI such as Time To Collision (TTC), etc. Moreover, the development value may further relate to e.g. how rare a driving scenario is, current ADS development and/or testing needs, ODD expansion plan(s), ADS release plan(s), test needs, etc, The development value criteria, on the other hand, may be represented by any feasible one or more criteria and/or thresholds pinpointing and/or filtering out ADS performance data - and/or driving scenarios - deemed valuable, for instance - as indicated above - in view of ADS testing such as of ADS safety, for instance critical driving scenarios, and/or unseen, rare and/or valuable driving scenarios. The development value criteria may thus for instance be represented by threshold(s) and/or one or more criteria stipulating conditions, for instance in view of type of driving scenario, threat metric level(s), threat measure level(s), KPI(s) levels, etc.

"Development value" may refer to "development level" and further to "relevance value", "importance value" and/or "criticality value". "Development value of the generated ADS performance data", on the other hand, may refer to "development value of at least a first driving scenario of the generated ADS performance data". Moreover, "determining a development value of the generated ADS performance data" may according to an example refer to "determining by assessing the generated ADS performance data, a development value of the generated ADS performance data", "determining, by assessing the generated ADS performance data, a development value of a driving scenario associated with the selected at least first potential interaction situation" and/or "determining, by assessing the generated ADS performance data, a development value of a driving scenario associated with an interaction with a road user at the selected at least first potential interaction situation". "Collecting [...] provided that said development value fulfils predeterminable development value criteria" may refer to "collecting [...] when and/or given that said development value fulfils predeterminable development value criteria" and/or "collecting [...] provided that said development value matches predeterminable development value criteria", whereas "development value criteria" may refer to "relevance value criteria", "importance value criteria" and/or "criticality value criteria", "development value criteria pinpointing and/or filtering out ADS performance data - and/or driving scenarios - deemed valuable, e.g. in view of ADS testing" and/or "development value criteria stipulating conditions for when a development value is deemed valuable and/or interesting in view of ADS testing"".

As further shown in Fig. 2, the scenario generating system 1 comprises a surroundings obtaining unit 101, an interaction determining unit 102, an interaction selecting unit 103, a position identifying unit 104, a virtual vehicle controlling unit 105, a data generating unit 106, an optional ODD fulfillment determining unit 107, an optional value determining unit 108, and an optional data collecting unit 109, all of which already have been described in greater detail above. Furthermore, the embodiments herein for supporting generation of driving scenarios of an ADS 21, said ADS 21 being provided onboard a vehicle 2, may be implemented through one or more processors, such as a **processor 110,** for instance represented by at least a first Central Processing Unit, CPU, at least a first Graphics Processing Unit, GPU, at least a first Tensor Processing Unit, TPU, and/or at least a first Field-Programmable Gate Array, FPGA, together with computer program code for performing the functions and actions of the embodiments herein. Said program code may also be provided as a computer program product, for instance in the form of a data carrier carrying computer program code for performing the embodiments herein when being loaded into the scenario generating system 1. One such carrier may be in the form of a CD/DVD ROM disc and/or a hard drive, it is however feasible with other data carriers. The computer program code may furthermore be provided as pure program code on a server and downloaded to the scenario generating system 1. The scenario generating system 1 may further comprise a **memory 111** comprising one or more memory units. The memory 110 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 111 may be arranged to be used to store e.g. information, and further to store data, configurations, scheduling, and applications, to perform the methods herein when being executed in the scenario generating system 1. For instance, the computer program code may be implemented in the firmware, stored in FLASH memory 111, of an embedded processor 110, and/or downloaded wirelessly e.g. from an offboard server. Furthermore, units 101-109, the optional processor 110 and/or the optional memory 111, may at least partly be comprised in one or more **nodes 112** e.g. ECUs of the vehicle 2 e.g. in and/or in association with the ADS 21. It should thus be understood that parts of the described solution potentially may be implemented in a **system 7** located external the vehicles 2, or in a combination of internal and external the vehicle 2, for instance in one or more servers in communication with the vehicle 2, such as in a distributed system and/or solution e.g. in a so-called cloud solution. Such an external system 7 may for instance be represented by one or more systems 7 offboard the vehicle 2, for instance represented by a backend system and/or centralized system. Those skilled in the art will also appreciate that said units 101-109 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 111, that when executed by the one or more processors such as the processor 110 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

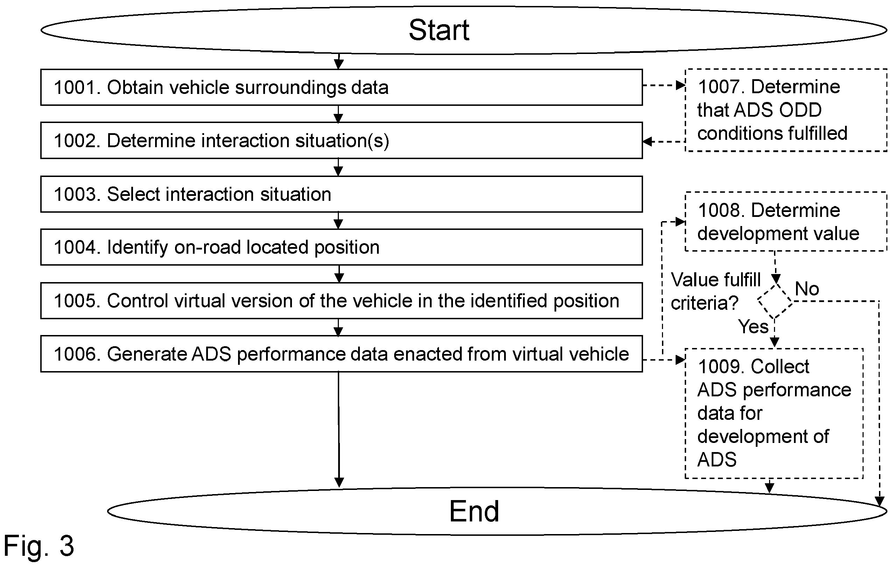

**Fig. 3** is a flowchart depicting an exemplifying method performed by a scenario generating system 1 according to embodiments of the disclosure. Said method is for supporting generation of driving scenarios of an ADS 21, which ADS 21 is provided onboard a vehicle 2. The exemplifying method, which may be continuously repeated, comprises one or more of the following actions discussed with support from Figs. 1 and 2. Moreover, the actions may be taken in any suitable order and/or one or more actions may be performed simultaneously and/or in alternate order where applicable. For instance, Action 1002 and optional Actions 1007 may be performed in alternate order and/or simultaneously.

### Action 1001

In Action 1001, the scenario generating system 1 obtains - e.g. with support from the surroundings obtaining unit 101 - vehicle surroundings data based on sensor data derived from one or more vehicle-mounted sensors 24.

### Action 1002

In Action 1002, the scenario generating system 1 determines - e.g. with support from the interaction determining unit 102 - by assessing the vehicle surroundings data, one or more potential interaction situations ahead involving the vehicle 2 and one or more potential surrounding road users 3.

### Action 1003

In Action 1003, the scenario generating system 1 selects - e.g. with support from the interaction selecting unit 103 - at least a first of the one or more potential interaction situations, fulfilling predeterminable interaction criteria pinpointing interaction situations in view of which further ADS development is requested.

Optionally, Action 1003 of selecting at least a first of the one or more potential interaction situations may comprise - and/or the interaction selecting unit 103 may be adapted and/or configured for selecting at least a first of the one or more potential interaction situations, fulfilling predeterminable interaction criteria **set in view of** previously collected ADS performance data.

### Action 1004

In Action 1004, the scenario generating system 1 identifies - e.g. with support from the position identifying unit 104 - an on-road located position 5 offering another vantage point than the vehicle 2 to the selected at least first potential interaction situation, which on-road located position 5 fulfills predeterminable position criteria defining on-road located positions relative the selected at least first potential interaction situation, of interest in view of further ADS development.

Optionally, Action 1004 of identifying an on-road located position 5 may comprise - and/or the position identifying unit 104 may be adapted and/or configured for - identifying an on-road located position 5 fulfilling predeterminable position criteria **set in view of** previously collected ADS performance data.

### Action 1005

In Action 1005, the scenario generating system 1 controls - e.g. with support from the virtual vehicle controlling unit 105 - by the ADS 21, a virtual version 6 of the vehicle 2 deployed in the identified position 5.

### Action 1006

In Action 1006, the scenario generating system 1 generates - e.g. with support from the data generating unit 106 - ADS performance data enacted from the ADS-controlled virtual vehicle 6.

### Action 1007

In optional Action 1007, the scenario generating system 1 may determine - e.g. with support from the optional ODD fulfilment determining unit 107 - that Operational Design Domain, ODD, conditions of the ADS 21 are fulfilled.

### Action 1008

In optional Action 1008, the scenario generating system 1 may determine - e.g. with support from the optional value determining unit 108 - a development value of the generated ADS performance data.

### Action 1009

In optional Action 1009, the scenario generating system 1 may collect - e.g. with support from the optional data collecting unit 109 - at least a portion of the generated ADS performance data for development of ADSs.

Optionally, should Action 1009 of collecting at least a portion of the generated ADS performance data, follow upon optional Action 1008 of determining av development value of the generated ADS performance data, then Action 1009 may comprise - and/or the optional data collecting unit 109 may be adapted and/or configured for - collecting the at least a portion of the generated ADS performance data, provided that the development value fulfils predeterminable development value criteria.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a scenario generating system (1) for supporting generation of driving scenarios of an Automated Driving System, ADS (21), said ADS (21) being provided onboard a vehicle (2), said method comprising:
***obtaining*** (1001) vehicle surroundings data based on sensor data derived from one or more vehicle-mounted sensors (24);
***determining*** (1002) by assessing said vehicle surroundings data, one or more potential interaction situations ahead involving said vehicle (2) and one or more potential surrounding road users (3);
***selecting*** (1003) at least a first of the one or more potential interaction situations, fulfilling predeterminable interaction criteria pinpointing interaction situations in view of which further ADS development is requested;
***Identifying*** (1004) an on-road located position (5) offering another vantage point than said vehicle (2) to the selected at least first potential interaction situation, said on-road located position (5) fulfilling predeterminable position criteria defining on-road located positions relative the selected at least first potential interaction situation, of interest in view of further ADS development;
***controlling*** (1005) by said ADS (21), a virtual version (6) of said vehicle (2) deployed in the identified position (5); and
***generating*** (1006) ADS performance data enacted from the ADS-controlled virtual vehicle (6).

2. The method according to claim 1, further comprising:
***collecting*** (1009) at least a portion of the generated ADS performance data for development of ADSs.

3. The method according to claim 2, further comprising:
***determining*** (1008) a development value of the generated ADS performance data;
wherein said ***collecting*** (1009) comprises collecting the at least a portion of the generated ADS performance data, provided that said development value fulfils predeterminable development value criteria.

4. The method according to any one of claims 1-3, wherein said ***selecting*** (1003) at least a first of the one or more potential interaction situations comprises selecting at least a first of the one or more potential interaction situations, fulfilling predeterminable interaction criteria **set in view of** previously collected ADS performance data.

5. The method according to any one of claims 1-4, wherein said ***identifying*** (1004) an on-road located position (5) comprises identifying an on-road located position (5) fulfilling predeterminable position criteria **set in view of** previously collected ADS performance data.

6. The method according to any one of claim 1-5, further comprising:
***determining*** (1007) that Operational Design Domain, ODD, conditions of said ADS (21) are fulfilled.

7. A **scenario generating system** (1) for supporting generation of driving scenarios of an Automated Driving System, ADS (21), said ADS (21) being provided onboard a vehicle (2), said scenario generating system (1) comprising:
a **surroundings obtaining unit** (101) for ***obtaining*** (1001) vehicle surroundings data based on sensor data derived from one or more vehicle-mounted sensors (24);
an **interaction determining unit** (102) for ***determining*** (1002) by assessing said vehicle surroundings data, one or more potential interaction situations ahead involving said vehicle (2) and one or more potential surrounding road users (3);
an **interaction selecting unit** (103) for ***selecting*** (1003) at least a first of the one or more potential interaction situations, fulfilling predeterminable interaction criteria pinpointing interaction situations in view of which further ADS development is requested;
a **position determining unit** (104) for ***Identifying*** (1004) an on-road located position (5) offering another vantage point than said vehicle (2) to the selected at least first potential interaction situation, said on-road located position (5) fulfilling predeterminable position criteria defining on-road located positions relative the selected at least first potential interaction situation, of interest in view of further ADS development;
a **virtual vehicle controlling unit** (105) for ***controlling*** (1005) by said ADS (21), a virtual version (6) of said vehicle (2) deployed in the identified position (5); and
a **data generating unit** (106) for ***generating*** (1006) ADS performance data enacted from the ADS-controlled virtual vehicle (6).

8. The scenario generating system (1) according to claim 7, further comprising:
a **data collecting unit** (109) for ***collecting*** (1009) at least a portion of the generated ADS performance data for development of ADSs.

9. The scenario generating system (1) according to claim 8, further comprising:
a **value determining unit** (108) for ***determining*** (1008) a development value of the generated ADS performance data;
wherein said data collecting unit (109) is adapted and/or configured for collecting the at least a portion of the generated ADS performance data, provided that said development value fulfils predeterminable development value criteria.

10. The scenario generating system (1) according to any one of claims 7-9, wherein said interaction selecting unit (103) is adapted and/or configured for selecting at least a first of the one or more potential interaction situations, fulfilling predeterminable interaction criteria **set in view of** previously collected ADS performance data.

11. The scenario generating system (1) according to any one of claims 7-10, wherein said position determining unit (104) is adapted and/or configured for identifying an on-road located position (5) fulfilling predeterminable position criteria **set in view of** previously collected ADS performance data.

12. The scenario generating system (1) according to any one of claim 7-11, further comprising:
an **ODD fulfilment determining unit** (107) for ***determining*** (1007) that Operational Design Domain, ODD, conditions of said ADS (21) are fulfilled.

13. An arrangement, for instance a **vehicle** (2) and/or an **offboard system** (7), comprising a scenario generating system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.
